# EUROPÄISCHE PATENTSCHRIFT

(11) **EP 4 046 270 B1**
(45) Veröffentlichungstag und Bekanntmachung des Hinweises auf die Patenterteilung: **20.09.2023**
(21) Anmeldenummer: 20793254.2
(22) Anmeldetag: 14.10.2020
(51) Int. Cl.: H02S 20/21, E01F 8/00

(54) **LÄRMSCHUTZVORRICHTUNG**
NOISE CONTROL DEVICE
DISPOSITIF DE RÉGULATION DE BRUIT

(30) Priorität: 14.10.2019 AT 508772019
(43) Veröffentlichungstag der Anmeldung: 24.08.2022
(73) Patentinhaber: WAKONIG, Martin, 1190 Wien (AT)
(72) Erfinder: WAKONIG, Martin, 1190 Wien (AT)
(74) Vertreter: SONN Patentanwälte OG
(86) Internationale Anmeldenummer: PCT/AT2020/060369
(87) Internationale Veröffentlichungsnummer: WO 2021/072467

(56) Entgegenhaltungen:
- AT-B1- 520 932
- DE-A1- 4 417 065
- DE-A1- 10 327 762
- DE-A1-102009 039 736
- FR-A1- 2 455 127
- IT-A1- MI20 100 853
- KR-A- 20090 013 337
- US-A1- 2018 254 736

## Beschreibung

Die Erfindung betrifft eine Lärmschutzvorrichtung mit einem im Wesentlichen senkrechten Wandelement, mindestens einem vom Wandelement ausgehenden Ausleger und mindestens einem von dem Ausleger getragenen Solarmodul, sowie ein Lärmschutzsystem mit einer solchen Lärmschutzvorrichtung.

Eine gattungsgemäße Lärmschutzvorrichtung ist aus der DE 20 2009 015 905 U1 bekannt. Diese zielt jedoch darauf ab, dass sich das Tragwerk für die Solarmodule bis zum oberen Ende der senkrechten Lärmschutzwand erstreckt, damit Lärm aus der Richtung einer lärmemittierenden Quelle, z.B. von einer Autobahn oder einer Gleisanlage, über die Lärmschutzwand abgelenkt wird.

Die DE 103 27 762 A1 zeigt ein Mehrzweck-Brückengeländer als gemeinsame Halterung für Lärmschutzplatten einerseits und für Solarmodulplatten andererseits. Dabei werden die Stützeigenschaften der horizontal und vertikal ausgerichteten Verstrebungen des Schutzgeländer zusätzlich genutzt. Einerseits zur Halterung für Lärmschutzwände und andererseits zur Halterung für Solarzellenwände bzw. -module. Im Einzelnen werden an dem Brückengeländer auf seiner der Sonne zugewandten Seite die Solarzellenwände und auf seiner der Sonne abgewandten, dem Fahrverkehr zugewandten Seite die Lärmschutzwände unter einem jeweils wählbaren Neigungswinkel einander abgewinkelt zulaufend vorgeschlagen.

In KR 20170141449 A ist ein Schallschutzpaneel gezeigt. Eine geneigte Trägerplatte ist zwischen einem vorhandenen Schallschutzpaneel, das auf einer Straße oder einem Eisenbahngleis installiert ist, und einer geneigten Fläche, die auf der Rückseite des Schallschutzpaneels angeordnet ist, vorgesehen, um das Schallschutzpaneel stabil zu halten. Auf der geneigten Trägerplatte kann ein Solarzellenpaneel montiert sein.

Die FR 2455127 A1 zeigt eine kombinierte Solarenergiekollektor- und Schalldämmeinheit, die mehrere ebene Platten umfasst, wobei die ebenen Platten rautenförmige Prismen bilden, die zur Optimierung der Energieerfassung und Schallreflexion schräg geneigt sind.

Die US 2018/0254736 A1 zeigt multifunktionale Trennwände bzw. Barrieren, die mit Solarpaneelen ausgestattet sind. Die gezeigten Vorrichtungen können als Begrenzungswände, Sicherheitsbarrieren, schalldämpfende Barrieren, Feuerbarrieren, Windbarrieren oder Staubbarrieren verwendet werden.

Die DE 10 2009 039 736 A1 zeigt an vertikalen Wänden befestigbare Solaranlagen, unter anderem auch zur Anwendung auf Schallschutzwänden. Es sind mehrere gelenkig miteinander verbundene Solarmodule vorgesehen, die mittels Gelenken positionsveränderlich angebracht sind.

Die AT 520 932 B1 zeigt ein Wandelement für eine Lärmschutzwand. Das Wandelement weist einen Körper mit einem Auflager auf, das ein Solarmodul trägt. Des Weiteren ist eine Schallabsorptionsoberfläche auf dem Wandelement vorgesehen.

Die DE 44 17 065 A1 offenbart ein Verkehrsleitsystem für Fahrzeuge mit Elektroantrieb, wobei seitlich an den Fahrbahnen angebrachte Stromschienen zur Energieversorgung der elektrogetriebenen Fahrzeuge dienen und wobei Solarzellen seitlich entlang der Fahrbahnen gleichzeitig als Schallschutzwände dienen.

Es ist eine Aufgabe der Erfindung, dass weniger Lärm über die Wand umgelenkt wird. Eine solche Umlenkung ist beispielsweise in hügeligem oder bergigem Gelände nachteilig, weil dann der die Lärmschutzwand überquerende Lärm im Vergleich zu einer Situation ohne Lärmschutzvorrichtung sogar zunimmt.

Die Erfindung sieht eine Lärmschutzvorrichtung der eingangs angeführten Art vor, wobei der Ausleger das Wandelement seitlich stützt, wobei das Wandelement oberhalb einer Oberkante des Solarmoduls eine Schallschutzfläche bildet, wobei die Schallschutzfläche als Schallabsorptionsfläche ausgebildet ist. Somit wird ein Teil des von dem Solarmodul umgelenkten Schall in die Schallschutzfläche umgelenkt und dort abgelenkt, gestreut, absorbiert oder eine Kombination daraus. Beispielsweise kann im Fall einer Anordnung der Solarmodule auf einer dem Lärm zugewandten Seite der Lärmschutzvorrichtung eine Verringerung des über die Wand umgelenkten Lärms erzielt werden. Die Schallschutzfläche ist als Schallabsorptionsfläche ausgebildet. Darunter wird verstanden, dass der Schalldruckpegel des von der Schallabsorptionsfläche reflektierten oder umgelenkten Schalls z.B. um mindestens 4 dB geringer ist als der Schalldruckpegel des auf der Schallabsorptionsfläche eintreffenden Schalls.

Im Hinblick auf die optimale Nutzung der Solarmodule kann sich die Schallschutzfläche ausgehend von der Oberkante des Solarmoduls im Wesentlichen senkrecht nach oben erstrecken. Die Abschattung der Solarmodule ist dadurch so gering wie möglich.

Weiters kann die Höhe der Schallschutzfläche oberhalb der Oberkante des Solarmoduls mindestens so groß wie ein senkrechter Abstand zwischen einer Unterkante des Solarmoduls und der Oberkante des Solarmoduls sein. Beispielsweise kann diese Höhe etwa doppelt so groß sein als besagter Abstand. Hierbei macht man sich zunutze, dass der oder die Ausleger seitliche Lasten auf das Wandelement aufnehmen kann. Solche seitlichen Lasten sind beispielsweise Windlasten. Diese definieren häufig die maximale Bauhöhe einer Schallschutzwand. Demzufolge kann aufgrund der vorgesehenen Ausleger und die dadurch erreichte Statik die Oberkante des Wandelements eine größere Höhe erreichen als die Oberkante einer herkömmlichen Schallschutzwand. Andere Lösungen für dieses Problem, wie die Kombination mit Lärmschutzdämmen und oder die Verstärkung der Steher (oder allgemein Konstruktion) und Fundamente, sind erheblich aufwendiger als die gegenständliche Offenbarung.

Gemäß einem Ausführungsbeispiel kann der mindestens eine Ausleger mit einer Haupterstreckungsebene des mindestens einen Wandelements einen Winkel von etwa 60° einschließen. Dieser Winkel entspricht einer Neigung der vom Ausleger getragenen Solarmodule von etwa 30° aus einer Horizontalen. Diese Anordnung ermöglicht eine besonders günstige Nutzung der einfallenden Sonnenenergie.

Optional kann die Lärmschutzvorrichtung mindestens zwei vom Wandelement ausgehende Ausleger aufweisen, wobei die Ausleger das Wandelement beidseitig abstützen, wobei optional die Ausleger auf beiden Seiten des Wandelements Solarmodule tragen. Auf diese Weise kann zugleich eine besonders stabile Abstützung des Wandelements nach beiden Seiten (auf Zug- und Druckbelastung der Ausleger) erzielt werden und eine besonders effiziente Flächennutzung für solare Energiegewinnung einer ansonsten häufig brachliegenden Fläche in unmittelbarer Nachbarschaft von lärmerzeugenden Verkehrsflächen erzielt werden.

Alternativ oder zusätzlich kann mindestens einer der Ausleger eine Abstrebung zu einem Fuß des Wandelements aufweisen, wobei die Abstrebung optional von einer Mitte des Auslegers ausgeht. Die Abstrebung entlastet einerseits den Ausleger von seinem Eigengewicht und ermöglicht andererseits die Aufnahme von Gewichtslasten aufgrund der vom Ausleger getragenen Solarmodule.

Weiters kann das Wandelement im Bereich der Schallschutzfläche mindestens ein zusätzliches Solarmodul tragen. Mit dem mindestens einen zusätzlichen Solarmodul kann auch die Fläche oberhalb des von dem Ausleger getragenen Solarmoduls zur Energiegewinnung genutzt werden. Aufgrund der Anordnung an der beispielsweise senkrechten Schallschutzfläche werden die zusätzlichen Solarmodule vor allem in den Morgen- und Abendstunden effizient genutzt.

In diesem Zusammenhang kann gemäß einem weiteren Ausführungsbeispiel das Wandelement im Bereich der Schallschutzfläche ein Profilelement aufweisen, wobei das Profilelement einen Körper aufweist und mindestens eine Außenseite hat, wobei der Körper zu der mindestens einen Außenseite hin ein Auflager aufweist, wobei das mindestens eine zusätzliche Solarmodule auf dem Auflager angeordnet und mit dem Körper verbunden ist, wobei das zusätzliche Solarmodul in Bezug auf eine Vertikale in Richtung einer Oberseite des Profilelements geneigt ist, wobei der Körper auf der mindestens einen Außenseite mindestens eine für ankommenden Schall direkt erreichbare Schallabsorptionsoberfläche aufweist, wobei die Schallabsorptionsoberfläche zumindest abschnittsweise in Bezug auf die Vertikale und/oder in Bezug auf eine Längsrichtung des Profilelements geneigt ist, wobei der Flächeninhalt der Schallabsorptionsoberfläche mindestens gleich groß wie der Flächeninhalt einer Ansichtsfläche des Profilelements ist. Die Schallabsorptionsoberfläche ist dabei jener Teil der Oberfläche des Profilelements, auf dessen Außenseite abseits der Oberfläche des zumindest einen zusätzlichen Solarmoduls, welcher für ankommenden Schall direkt erreichbar ist, d. h. ohne notwendige vorangehende Reflexion oder Umlenkung des Schalls. Durch ein zusätzliches Solarmodul für ankommenden Schall verdeckte Teile der Oberfläche des Profilelements sind daher nicht der Schallabsorptionsoberfläche zuzurechnen. Die Ansichtsfläche des Profilelements entspricht dem Flächeninhalt eines Umrisses des Profilelements in einer Seitenansicht auf die Außenseite. Genauer ist somit die Außenseitenansichtsfläche gemeint, d. h. in Blickrichtung normal auf die Vertikale und normal auf eine Längserstreckung des Profilelements auf die zumindest eine Außenseite. Aufgrund der zumindest abschnittsweisen Neigung der Schallabsorptionsoberfläche ist deren Flächeninhalt größer als der Flächeninhalt ihrer eigenen Ansichtsfläche. Die relative Differenz der beiden Flächeninhalte hängt vom Neigungswinkel ab. Bei einem Neigungswinkel von 45° ist das Verhältnis von Ansichtsfläche zu Oberfläche ungefähr 1:1,4 (1 zu Quadratwurzel aus 2). Daraus folgt, dass wenn ungefähr 71 % der Ansichtsfläche durch um 45° geneigte Schallabsorptionsoberflächen gebildet sind und die zusätzlichen Solarmodule die übrigen 29 % der Ansichtsfläche einnehmen, der Flächeninhalt der Schallabsorptionsoberfläche zumindest gleich groß ist wie der Flächeninhalt der Ansichtsfläche des Profilelements. Die Außenseite kann eine schallzugewandte Seite sein. Die Vertikale ist dabei jene Achse, die sich zwischen der Unterseite und der Oberseite des Profilelements erstreckt. Die Bezeichnung als "Vertikale" ist nicht einschränkend für die Verwendung des Profilelements, welches demnach auch für schräg aufgestellte Wandelemente verwendet werden kann, ohne den Gegenstand des Anspruchs 8 zu verlassen. Im Fall eines typischerweise senkrecht aufgestellten Kerns einer Lärmschutzvorrichtung aus den hier beschriebenen Wandelementen und Profilelementen entspricht die Vertikale der absoluten Vertikalen der Lärmschutzvorrichtung.

Die Vertikale ist beispielsweise normal auf eine Längsrichtung des Profilelements. Die Ansichtsfläche wie oben definiert entspricht dann der Fläche einer Projektion des Profilelements in eine von der Vertikalen und der Längsrichtung aufgespannten Ebene.

Der ankommende Schall (Schallimmission) erreicht die Schallabsorptionsoberfläche zwar direkt, aber nicht zwingend horizontal (normal auf die Vertikale). Da der Großteil der Schallimmission aus einem relative kleinen Bereich des Raumwinkels erwartet wird, kann der Flächeninhalt jener Abschnitte der Schallabsorptionsoberfläche, die für aus einem Lärmimmissionsbereich ankommenden Schall direkt erreichbar sind, (insgesamt) zumindest gleich groß wie der Flächeninhalt einer Ansichtsfläche des Profilelements sein, wobei der Lärmimmissionsbereich einen Winkelbereich zwischen einer Normale auf die Vertikale und einer um 70° aus dieser Normalen in Richtung einer Unterseite des Profilelements angestellten Neigung umfasst. Optional kann die obige Bedingung für den Flächeninhalt der Abschnitte der Schallabsorptionsoberfläche bereits bei einem Lärmimmissionsbereich mit einem Winkelbereich zwischen einer Normale auf die Vertikale (nachfolgend wird diese Normale kurz als 0° bezeichnet) und einer um 60° aus dieser Normalen in Richtung einer Unterseite des Profilelements angestellten Neigung erfüllt sein, oder bei einem Winkelbereich zwischen 0° und 50°, oder bei einem Winkelbereich zwischen 0° und 40°, oder bei einem Winkelbereich zwischen 0° und 30°, oder bei einem Winkelbereich zwischen 0° und 20°, oder bei einem Winkelbereich zwischen 0° und 10°.

Der Flächeninhalt der Schallabsorptionsoberfläche kann ca. dem 1,2-fachen oder mehrfachen des Flächeninhalts einer Ansichtsfläche des Profilelements entsprechen. Durch die größere Schallabsorptionsoberfläche werden die Schallabsorptionseigenschaften des Profilelements weiter verbessert und es kann bei gegebenem Absorbermaterial, z.B. des Körpers, ein besserer Schallabsorptionsgrad erzielt werden (d. h. es wird mehr Schall oder Schallenergie absorbiert). Optional kann der Flächeninhalt jener Abschnitte der

Schallabsorptionsoberfläche, die für aus dem Lärmimmissionsbereich ankommenden Schall direkt erreichbar sind, (insgesamt) zumindest dem 1,2-fachen des Flächeninhalts einer Ansichtsfläche des Profilelements entsprechen.

Weiters kann der Körper eine obere Lagerfläche und eine untere Lagerfläche zum Stapeln mehrerer Profilelemente in eine Stapelrichtung aufweisen, wobei die Lagerflächen zumindest teilweise im Wesentlichen normal auf die Vertikale angeordnet sind. Die Lagerflächen ermöglichen eine aneinander angrenzende Anordnung mehrerer Profilelemente in Richtung der Vertikale, sodass je nach Anzahl der Reihen von Profilelementen eine Lärmschutzvorrichtung unterschiedlicher Höhe gebildet werden kann.

Gemäß einem weiteren Ausführungsbeispiel kann die Schallabsorptionsoberfläche in eine Blickrichtung normal auf das zusätzliche Solarmodul durch das zusätzliche Solarmodul zumindest zum überwiegenden Teil verdeckt sein. Unter Annahme eines Lichteinfalls normal auf das zusätzliche Solarmodul (entspricht der optimalen Effizienz) liegt dann die Schallabsorptionsoberfläche zumindest zum überwiegenden Teil im Schatten des zusätzlichen Solarmoduls. Diese Anordnung des zusätzlichen Solarmoduls und der Schallabsorptionsoberfläche ermöglicht eine besonders hohe Nutzung der einfallenden Sonnenenergie. Es ist dabei unerheblich, ob die Schallabsorptionsoberfläche durch ein Solarmodul desselben Profilelements oder eines entlang der Vertikalen darüber angeordneten, benachbarten oder angrenzenden Profilelements liegt.

Optional kann die Schallabsorptionsoberfläche einer das Profilelement umfassenden Lärmschutzwand vollständig innerhalb einer Schattenlinie zwischen einer Oberkante eines unteren zusätzlichen Solarmoduls und einer Unterkante eines oberen zusätzlichen Solarmoduls angeordnet sein. Auf diese Weise kann vermieden werden, dass das Profil der Schallabsorptionsoberfläche die Effizienz der zusätzlichen Solarmodule durch Schatten beeinträchtigt.

In diesem Zusammenhang kann gemäß einer speziellen Ausführungsform der Körper auf der zumindest einen Außenseite außerhalb des zusätzlichen Solarmoduls zumindest eine Erhebung zur Vergrößerung der Schallabsorptionsoberfläche aufweisen, wobei eine Außenkante der Erhebung die Schattenlinie berührt oder innerhalb der Schattenlinie liegt. Mit einer solchen Erhebung kann der Raum innerhalb der Schattenlinie optimal zur Vergrößerung der Schallabsorptionsoberfläche genutzt werden, ohne die Effizienz eines darunter möglicherweise angeordneten zusätzlichen Solarmoduls (desselben oder eines benachbarten Profilelements) zu beeinträchtigen.

Alternativ oder zusätzlich kann der Abstand zwischen in Richtung der Vertikalen benachbarten zusätzlichen Solarmodulen einer das Profilelement umfassenden Lärmschutzwand so gewählt sein, dass die Schattenlinie zwischen diesen zusätzlichen Solarmodulen im Wesentlichen normal auf die Vorderseite zumindest eines zusätzlichen Solarmoduls angeordnet ist. Bei dieser Anordnung wirft unter Annahme eines Lichteinfalls normal auf das zusätzliche Solarmodul (entspricht der optimalen Effizienz) das obere zusätzliche Solarmodul keinen Schatten auf das untere zusätzliche Solarmodul. Es kann somit eine optimale Nutzung der verfügbaren Fotovoltaikfläche erzielt werden.

Weiters kann in einer Seitenansicht auf die Außenseite der Abstand zwischen in Richtung der Vertikalen benachbarten zusätzlichen Solarmodulen größer oder gleich dem Abstand zwischen einer Oberkante und einer Unterkante eines zusätzlichen Solarmoduls sein. Mit anderen Worten nehmen bei dieser Konfiguration die zusätzlichen Solarmodule 50 % oder weniger der Ansichtsfläche ein. Dadurch können sehr flache Neigungswinkel (kleiner als 30°) der Schallabsorptionsoberfläche und damit einhergehend sehr spitze Kanten (weniger als 60° eingeschlossenen Winkel) vermieden werden, welche sich einschränkend auf das für den Körper ohne Gefährdung dessen struktureller Integrität verwendbare Material auswirken könnten.

Ein Körper des Profilelements im Bereich der Schallschutzfläche kann beispielsweise im Wesentlichen aus einem schallabsorbierenden Material bestehen. Das schallabsorbierende Material kann zur Bildung einer Trägerstruktur für das zusätzliche Solarmodul geeignet sein. Als schallabsorbierendes Material wird hier ein Material mit einem Schallabsorptionsgrad von z.B. mindestens 4 dB verstanden. Das schallabsorbierende Material kann beispielsweise Holzbeton sein. Im Rahmen der gegenständlichen Offenbarung kann der Körper auch aus einem anderen schallabsorbierenden Material bestehen, wie beispielsweise aus Lochbeton.

Weiters betrifft, wie eingangs erwähnt, die Erfindung auch ein Lärmschutzsystem, aufweisend: eine Lärmschutzvorrichtung nach einer der oben beschriebenen Varianten und ein weiteres Wandelement mit einer weiteren Schallschutzfläche und einem weiteren Solarmodul, wobei die Schallschutzfläche der Lärmschutzvorrichtung und die weitere Schallschutzfläche im Wesentlichen senkrecht angeordnet sind, wobei das weitere Wandelement in einem Abstand von der Lärmschutzvorrichtung angeordnet ist, wobei ein Höhenunterschied zwischen einer Unterkante des Solarmoduls der Lärmschutzvorrichtung und einer Oberkante des weiteren Wandelements kleiner als das 0,6-fache oder gleich dem 0,6-fachen der Horizontalstrecke zwischen denselben Kanten ist und/oder ein Höhenunterschied zwischen einer Unterkante des weiteren Solarmoduls und einer Oberkante der Lärmschutzvorrichtung kleiner als das 0,6-fache oder gleich dem 0,6-fachen der Horizontalstrecke zwischen denselben Kanten ist. Das weitere Wandelement, die weitere Schallschutzfläche und das weitere Solarmodul können auch Teil einer weiteren Lärmschutzvorrichtung nach einer der oben beschriebenen Varianten sein. Der Höhenunterschied und die Horizontalstrecke zwischen zwei Kanten sind dabei in einer auf die beiden Kanten im Wesentlichen normale Schnittebene gemeint. Als Horizontalstrecke wird dabei jener Abstand verstanden, der der horizontalen Projektion der Strecke zwischen den beiden Kanten in dieser Schnittebene entspricht. Es hat sich herausgestellt, dass der oben angegebene Zusammenhang zwischen dem Höhenunterschied und der Horizontalstrecke im Mittel über verschiedene Ausrichtungen der Elemente (z.B. auf einer Ost-West-Achse oder auf einer Nord-Süd-Achse und allen schrägen Ausrichtung dazwischen) einen optimalen Wirkungsgrad der Solarmodule erzielt. Die Horizontalstrecke, d. h. im Wesentlichen der kleinste horizontale Abstand zwischen den Vorrichtungen, ist dabei in der Praxis beispielsweise durch eine Straßenbreite vorgegeben. Die Horizontalstrecke kann beispielsweise zwischen 5 m und 30 m sein, woraus (maximale) Höhenunterschiede zwischen 3 m und 18 m resultieren. Bei diesem Aufbau wird eine Abschattung der Solarmodule bei einem Einfallswinkel des Sonnenlichts von mindestens 30° über dem Horizont vermieden.

Weiters kann in diesem Zusammenhang der größere der beiden Höhenunterschiede etwa dem 0,6-fachen der zugeordneten Horizontalstrecke entsprechen. In diesem Fall wird bei einem Einfallswinkel des Sonnenlichts von 30° über dem Horizont und entsprechender, im Wesentlichen vollflächiger Ausstattung der Lärmschutzvorrichtungen mit Solarmodulen das gesamte, ansonsten auf die Grundfläche des Lärmschutzsystems einschließlich der vom Lärmschutzsystem begrenzten Flächen einfallende Sonnenlicht zur Erzeugung elektrischer Energie genutzt.

Die Erfindung wird nachfolgend anhand von Ausführungsbeispielen, auf die sie jedoch nicht beschränkt sein soll, und unter Bezugnahme auf die Zeichnungen noch weiter erläutert. Die Zeichnungen zeigen im Einzelnen:
Fig. 1 schematisch einen Anwendungsfall mit zwei Lärmschutzvorrichtungen gemäß der gegenständlichen Offenbarung an den beiden Außenrändern einer Autobahn und einer niedrigeren Lärmschutzwand zwischen den Fahrbahnen;
Fig. 2 und Fig. 3 schematisch einen Systemschnitt und eine schaubildliche Ansicht einer ein- oder beidseitig angeordneten Abstrebung einer Lärmschutzwand als Unterkonstruktion von Solarmodulen;
Fig. 4 und Fig. 5 schematisch einen Systemschnitt und eine schaubildliche Ansicht einer ein- oder beidseitig angeordneten Abstrebung von einer alternativen Lärmschutzwand als Unterkonstruktion von Solarmodulen, wobei die Lärmschutzwand mehrere Profilelemente aufweist;
Fig. 6 eine schaubildliche Ansicht einer ersten Ausführungsform eines beispielhaften Profilelements für die Anwendung gemäß Figuren 4 und 5;
Fig. 7 schematisch einen vertikalen Schnitt des Profilelements gemäß Fig. 6;
Fig. 8 eine schaubildliche Ansicht eines Wandmoduls für die Anwendung gemäß Figuren 4 und 5, mit beidseitig angeordneten Profilelementen.

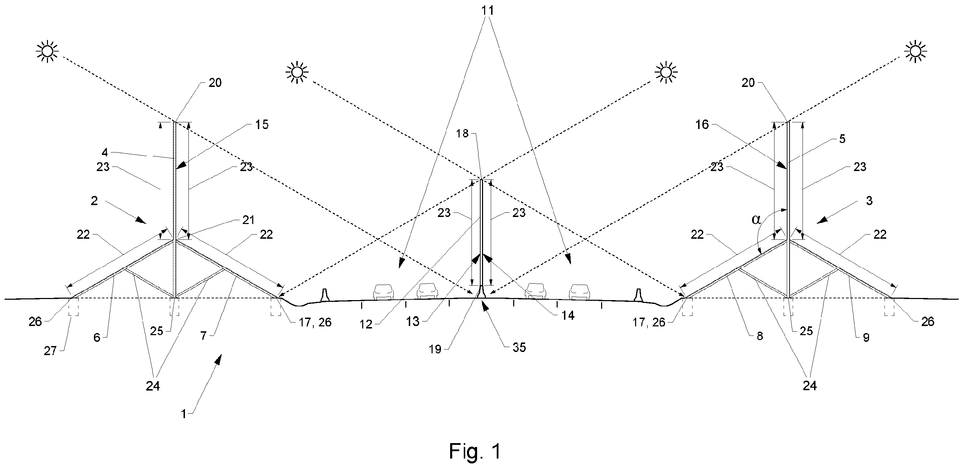

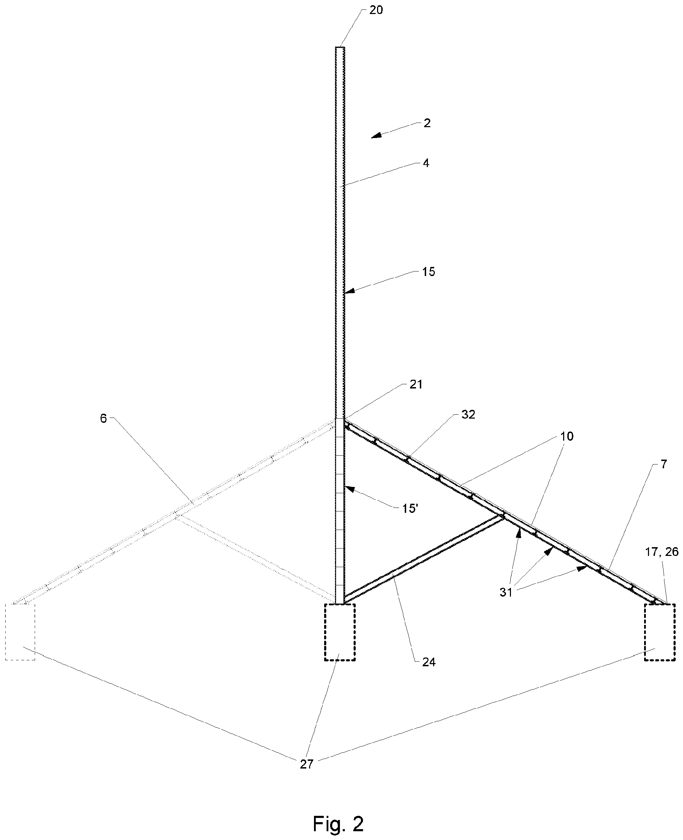

Fig. 1 zeigt ein Lärmschutzsystem 1 aus zwei Lärmschutzvorrichtungen 2, 3 mit im Wesentlichen senkrechten Wandelementen 4, 5 und einer niedrigeren Lärmschutzwand 35 dazwischen. Die Lärmschutzvorrichtungen 2, 3 weisen jeweils beidseitige, vom jeweiligen Wandelement 4, 5 ausgehende Ausleger 6-9 auf, welche die Wandelemente 4, 5 auf beiden Seiten seitlich stützen. Die Ausleger 6-9 schließen mit einer Haupterstreckungsebene des jeweils zugeordneten und abgestützten Wandelements 4, 5 einen Winkel α von etwa 60° ein. Auf sämtlichen Auslegern 6-9, d. h. auf beiden Seiten der Wandelemente 4, 5, sind Solarmodule 10 getragen (vgl. Fig. 2). Die Anordnung der Ausleger 6-9 in Bezug auf die Wandhöhen unter Berücksichtigung der Eigenverschattung von benachbarten Wänden z.B. entlang von Straßenzügen 11, unter Berücksichtigung der Wandflächen geeignet zur Energiegewinnung, z.B. mittels Fotovoltaik. Die niedrigere Lärmschutzwand 35 entspricht einem weiteren Wandelement 12 mit weiteren Schallschutzflächen 13, 14 und weiteren Solarmodulen. Die Schallschutzflächen 15, 16 der Lärmschutzvorrichtungen 2, 3 und die weiteren Schallschutzflächen 13, 14 sind im Wesentlichen senkrecht angeordnet. Das weitere Wandelement 12 der niedrigeren Lärmschutzwand 35 ist in einem Abstand von jeder der beiden Lärmschutzvorrichtungen angeordnet, der der Breite der Straßenzüge 11 einer zweispurigen Autobahn mit Pannenstreifen entspricht. Dabei entspricht auf beiden Seiten der niedrigeren Lärmschutzwand 35 ein Höhenunterschied zwischen einer Unterkante 17 der auf den inneren Auslegern 7, 8 getragenen Solarmodule der jeweiligen Lärmschutzvorrichtung 2, 3 und einer Oberkante 18 des weiteren Wandelements 12 etwa dem 0,6-fachen der Horizontalstrecke zwischen denselben Kanten 17, 18 und ein Höhenunterschied zwischen einer Unterkante 19 des weiteren Solarmoduls und einer Oberkante 20 der jeweiligen Lärmschutzvorrichtung 2, 3 etwa dem 0,6-fachen der Horizontalstrecke zwischen denselben Kanten 19, 20.

Die Wandelemente 4, 5 bilden oberhalb einer Oberkante 21 der von den Auslegern 6-9 getragenen Solarmodule 10 eine Schallschutzfläche 15, 16. Die Schallschutzflächen 15, 16 erstrecken sich jeweils ausgehend von der Oberkante 21 der Solarmodule 10 im Wesentlichen senkrecht nach oben. Die Höhe der Schallschutzflächen 15, 16 oberhalb der Oberkante 21 der Solarmodule 10 ist etwa doppelt so groß wie ein senkrechter Abstand zwischen einer Unterkante 17 des Solarmodule 10 und der Oberkante 21 der Solarmodule 10. Die Länge 22 der Ausleger, welche die Tiefe oder Breite der davon getragenen Solarmodule 10 bestimmt, ist etwa gleich groß wie die Höhe 23 der Schallschutzflächen 15, 16 oberhalb der Oberkante 21 der Solarmodule 10. Die Ausleger 6-9 schließen jeweils mit einer Haupterstreckungsebene des Wandelements 4, 5 einen Winkel von etwa 60° ein. Die Ausleger 6-9 weisen jeweils eine Abstrebung 24 zu einem Fuß 25 des Wandelements 4, 5 auf. Die Abstrebungen 24 gehen von einer Mitte des jeweils zugeordneten Auslegers 6-9 aus. Jeweils am Fuß 25 der Wandelemente 4, 5 und an den äußeren Enden 26 der Ausleger 6-9 sind Fundamentblöcke 27 im Untergrund eingelassen.

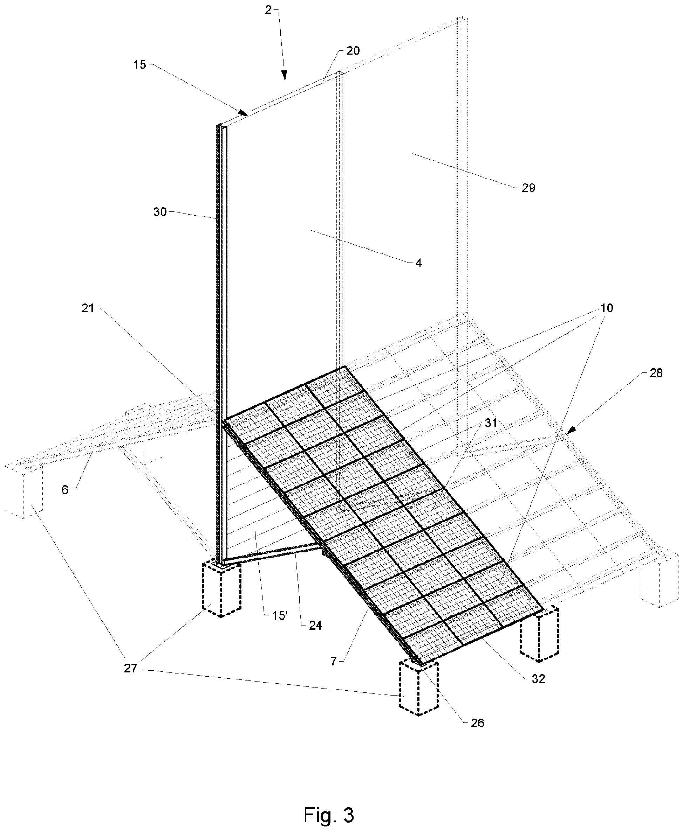

In Fig. 2 ist eine einzelne Lärmschutzvorrichtung 2 größer dargestellt und in Fig. 3 in einer schaubildlichen Ansicht dargestellt, wobei jeweils für gleiche Elemente gleiche Bezugszeichen wie in Fig. 1 verwendet werden und auf die obige Beschreibung verwiesen wird. Die Lärmschutzvorrichtung 2 ist mit einem einzelnen Ausleger 7 um auf nur einer Seite dargestellt, wobei ein zweiter Ausleger 6 auf der gegenüberliegenden Seite des Wandelements 4 als optionaler Teil gestrichelt eingezeichnet ist. Außerdem ist angrenzend an die Lärmschutzvorrichtung 2 eine gleichartige, benachbarte Lärmschutzvorrichtung 28 mit einem in der Ebene des Wandelements 4 anschließenden, benachbarten Wandelement 29 gestrichelt eingezeichnet. Das Wandelement 4 weist eine Wandkonstruktion aus Lärmschutzwandmodulen zwischen Stahlstehern 30 auf, wie z.B. eine Lärmschutzwand mit aufgesetzten oder integrierten Solarmodulen. Die Stahlsteher 30 sind jeweils in einem Fundamentblock 27 verankert. Das Wandelement 4 ist unterhalb der Oberkante 21 der Solarmodule 10 fortgesetzt. Das Wandelement 4 bildet oberhalb und unterhalb der Oberkante 21 Schallschutzflächen 15, 15'. Die Solarmodule 10 sind in Reihen 31 angeordnet, wobei horizontale Querverstrebungen 32 zwischen den Auslegern 7 die Reihen 31 abstützen.

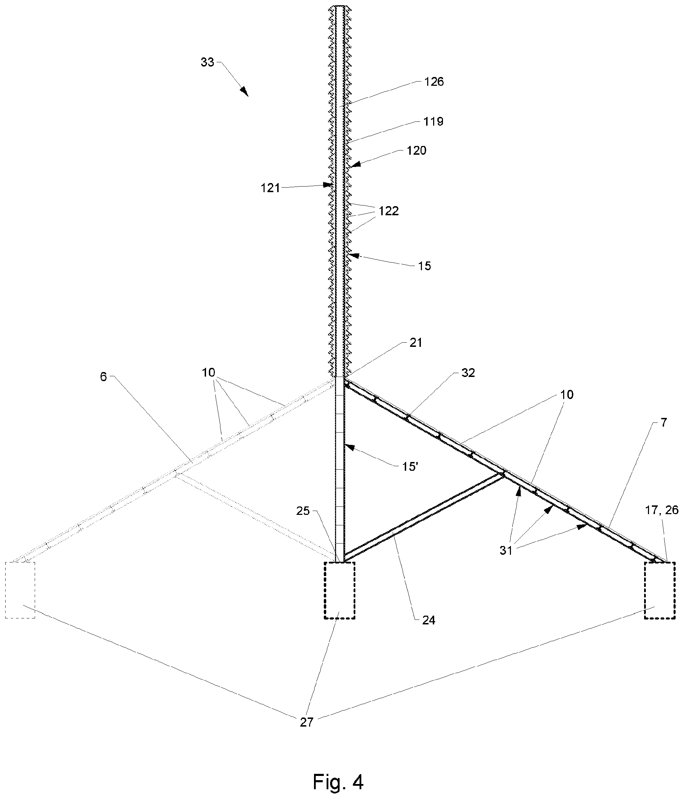

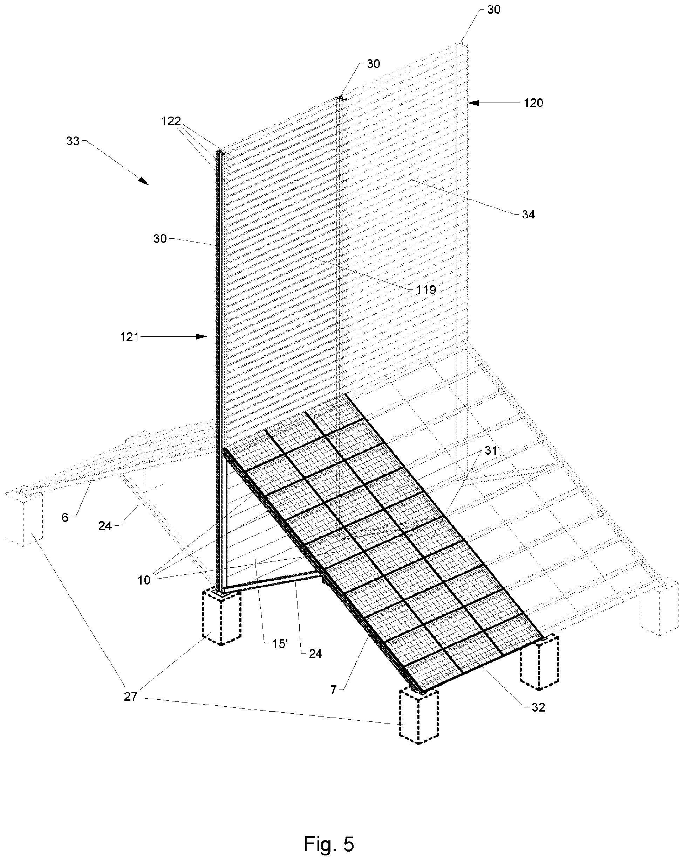

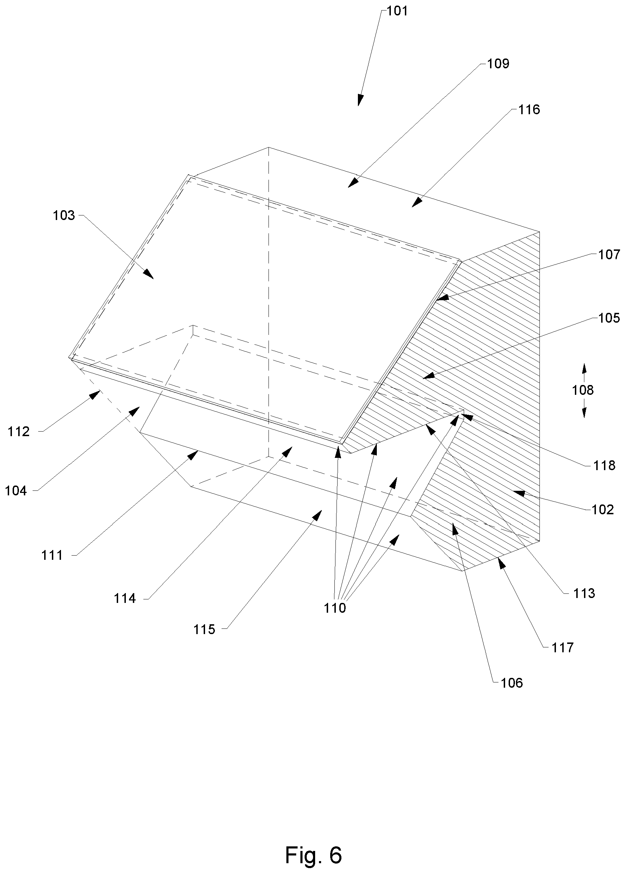

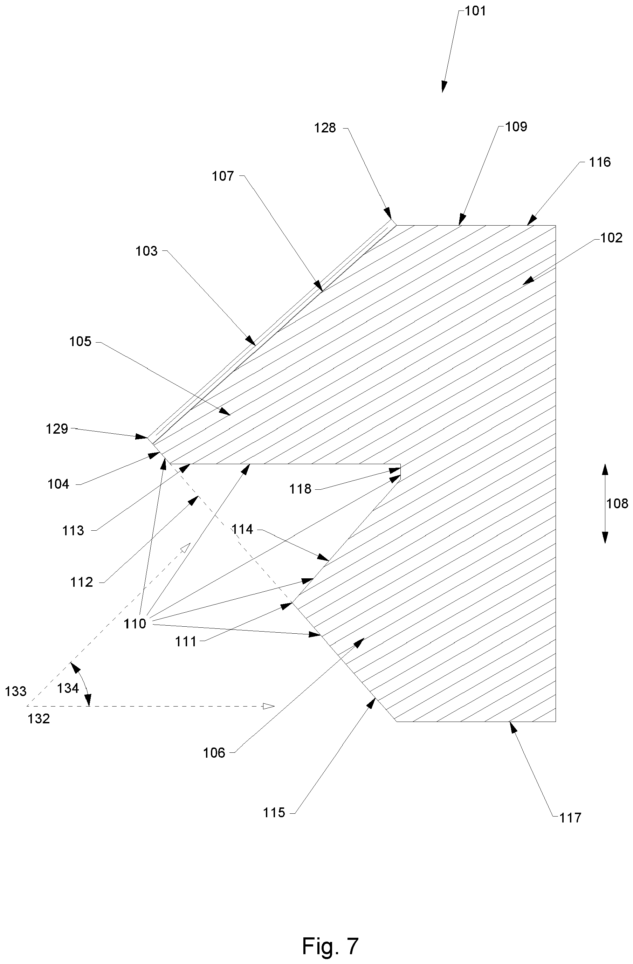

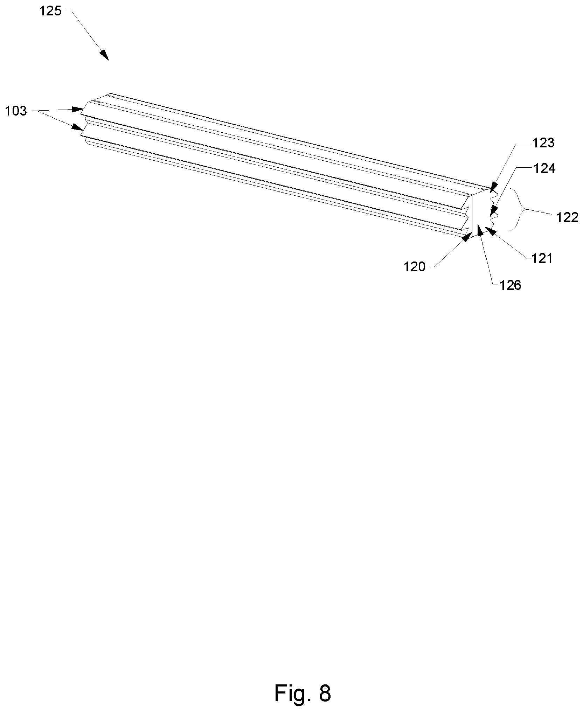

In Fig. 4 und Fig. 5 ist eine Lärmschutzvorrichtung 33 mit einem Wandelement 119 (und einem benachbarten Wandelement 34) gezeigt, bei denen auf beiden Seiten 120, 121 mehrere Profilelemente 122 vertikal übereinander angeordnet sind. Die einzelnen Profilelemente 122 sind aus zwei Modulen 123, 124 aufgebaut (vgl. Fig. 8), wobei die einzelnen Module 123, 124 jeweils einem Profilelement 101 gemäß der Ausführungsform gemäß Fig. 6 und Fig. 7 entsprechen, und die beiden Module 123, 124 einen gemeinsamen, durchgängigen Körper 125 aufweisen, sodass zwei Module 123, 124 zusammen ein Profilelement 122 (mit dementsprechend zwei Solarmodulen) bilden. Das Wandelement 119 weist einen tragenden Kern 126, z.B. aus Stahlbeton oder einer Rahmen-Leichtkonstruktion zwischen Stahlstehern auf (Steherabstand z.B. 165, 200 oder 500 cm), sowie einen Fundamentblock 27 aus Beton auf. Hinsichtlich des Auslegers 7 (und optional des rückseitigen Auslegers 6) entspricht die Konstruktion der Lärmschutzvorrichtung 33 jener der Lärmschutzvorrichtung 2, sodass für diese Teile dieselben Bezugszeichen verwendet werden und auf die obige Beschreibung verwiesen wird.

Die Profilelemente 122 im Bereich der Schallschutzfläche 15 tragen zusätzliche Solarmodule 103 (vgl. Fig. 6). Der Abstand zwischen in Richtung der Vertikalen benachbarten zusätzlichen Solarmodulen 103 des Wandelements 119 ist so gewählt, dass die Schattenlinie 112 zwischen diesen Solarmodulen 103 im Wesentlichen normal auf die Außenseite der in diesem Beispiel parallel angeordneten Solarmodule 103 ist. In einer Seitenansicht auf die Außenseite 104 (nicht dargestellt, aber aus dem dargestellten Profil erkennbar) ist der Abstand zwischen in Richtung der Vertikalen benachbarten Solarmodulen 103 (beispielsweise 14 cm) größer oder gleich dem Abstand zwischen einer Oberkante 128 und einer Unterkante 129 eines Solarmoduls 103 (beispielsweise 11 cm). Die Schallabsorptionsoberflächen 110 der Profilelemente 122 sind jeweils vollständig innerhalb einer Schattenlinie 112 zwischen einer Oberkante 128 eines unteren zusätzlichen Solarmoduls 103 und einer Unterkante 129 eines oberen zusätzlichen Solarmoduls 103 angeordnet.

Die Profilelemente 122 (mit einer Modulhöhe von beispielsweise 25 cm und einer entsprechenden Elementhöhe von beispielsweise 50 cm) sind gestapelt, sodass sich die Lagerflächen 116, 117 benachbarter Profilelemente 122 berühren. Die Breite der Solarmodule 103 beträgt beispielsweise 16,5 cm. Die einzelnen Profilelemente 122 sind mit dem tragenden Kern 126 verbunden, beispielsweise angeklebt oder angeschraubt.

Fig. 5 zeigt eine schaubildliche Ansicht eines Wandelements 119 mit beidseitig angeordneten Profilelementen 122 gemäß Fig. 4. Die Lärmschutzvorrichtung 33 weist in Längsrichtung mehrere Wandelemente 119, 34 auf, die jeweils durch Stahlsteher 30 begrenzt sind, gestützt werden und im Boden mit Fundamentblöcken 27 verankert sind.

Fig. 6 und Fig. 7 zeigen ein einfacheres (halb so hohes) Profilelement 101 für ein Wandelement 119 gemäß Figuren 4 und 5. Das Profilelement 101 weist einen Körper 102 aus Holzbeton und ein (im Zusammenhang mit der gesamten Lärmschutzvorrichtung 33 "zusätzliches") Solarmodul 103 auf. Das Profilelement 101 hat eine Außenseite 104 (auch Vorderseite). Der Körper 102 weist auf der Außenseite 104 zwei Erhebungen 105, 106 oder Vorsprünge auf. Die erste Erhebung 105 bildet zur Außenseite 104 hin ein Auflager 107, auf dem das Solarmodul 103 angeordnet und mit dem Körper 102 verbunden ist. Das Solarmodul 103 ist in Bezug auf eine Vertikale 108 in Richtung einer Oberseite 109 des Profilelements 101 geneigt.

Außerdem weist der Körper 102 auf der Außenseite 104 eine für aus einem Lärmimmissionsbereich entsprechend einem Winkelbereich 134 von normal (d.h. parallel zur Normalen 132) oder bis zu einer Neigung 133 von 45° unter der Normalen 132 auf die Vertikale 108 ankommenden Schall direkt erreichbare Schallabsorptionsoberfläche 110 auf. Die zweite Erhebung 106 ist außerhalb des Solarmoduls 103 angeordnet, genauer abseits oder benachbart dem Solarmodul 103, und dient der Vergrößerung der Schallabsorptionsoberfläche 110, wobei eine Außenkante 111 der Erhebung 106 eine Schattenlinie 112 unterhalb des Solarmoduls 103 berührt, sodass die Erhebung 106 innerhalb der Schattenlinie zu liegen kommt. Die Schallabsorptionsoberfläche 110 ist in eine Blickrichtung normal auf das Solarmodul 103 durch das Solarmodul 103 vollständig verdeckt.

Die Schallabsorptionsoberfläche 110 ist aufgrund der Geometrie der zweiten Erhebung 106 (mit einem Dreiecksprofil) im Wesentlichen in drei Abschnitte 113, 114 und 115 unterteilt, welche in Bezug auf die Vertikale 108 des Profilelements 101 geneigt bzw. normal sind. Der Flächeninhalt der Schallabsorptionsoberfläche 110 ist größer als der Flächeninhalt einer Ansichtsfläche des Profilelements 101, z.B. um ca. das 1,2-fache.

Der Körper 102 weist eine obere Lagerfläche 116 und eine untere Lagerfläche 117 zum Stapeln mehrerer Profilelemente 101 in eine Stapelrichtung auf. Die Lagerflächen 116, 117 sind zum größten Teil im Wesentlichen normal auf die Vertikale 108 angeordnet.

Bei der beschriebenen möglichen Ausführungsform weist die Schallabsorptionsoberfläche 110 neben den drei geneigten bzw. horizontalen Abschnitten 113, 114 und 115 auch einen parallel zur Vertikalen angeordneten vierten Abschnitt 118 zwischen den beiden Erhebungen 105, 106 auf, was den in der Herstellung möglicherweise problematischen spitzen Winkel zwischen den beiden Erhebungen 105, 106 vermeiden soll. Aus demselben Grund ist die Spitze (Außenkante) der ersten Erhebung 105 abgefast.

Fig. 8 zeigt schematisch einen Abschnitt des Wandelements 119 gemäß Figuren 4 und 5 entsprechend einem Wandmodul. Das Wandmodul umfasst einen Abschnitt des Kerns 126. Auf beiden Seiten 120, 121 des Kernabschnitts ist jeweils ein Profilelement 122 mit einem durchgängigen Körper 125 angeordnet. Jedes Profilelement weist dabei zwei Module 123, 124 auf, die jeweils mit einem Solarmodul 103 ausgestattet sind. Das hier dargestellte Wandmodul hat beispielsweise eine Abmessungen entlang der Vertikale 108 (Höhe) von etwa 50 cm. Jedes Modul 123, 124 oder jede Modulreihe ist daher ca. 25 cm hoch. Die Solarmodule 103 sind dabei ca. 16,5 cm breit. Alternativ kann vorgesehen sein, dass ein Wandmodul dieser Höhe drei Modulreihen aufweist, wobei die Solarmodule eine Breite von etwa 12,5 cm haben. Es ist aber auch denkbar, Wandmodul mit nur einer Modulreihe vorzusehen, z.B. mit einer Höhe von 25 cm.

## Patentansprüche

1. Lärmschutzvorrichtung (2) mit einem im Wesentlichen senkrechten Wandelement (4), mindestens einem vom Wandelement (4) ausgehenden Ausleger (7) und mindestens einem von dem Ausleger (7) getragenen Solarmodul (10), **dadurch gekennzeichnet, dass** der Ausleger (7) das Wandelement (4) seitlich stützt, und dass das Wandelement (4) oberhalb einer Oberkante (21) des Solarmoduls (10) eine Schallschutzfläche (15) bildet, wobei die Schallschutzfläche (15) als Schallabsorptionsfläche ausgebildet ist.

2. Lärmschutzvorrichtung (2) gemäß Anspruch 1, **dadurch gekennzeichnet, dass** sich die Schallschutzfläche (15) ausgehend von der Oberkante (21) des Solarmoduls (10) im Wesentlichen senkrecht nach oben erstreckt.

3. Lärmschutzvorrichtung (2) gemäß Anspruch 2, **dadurch gekennzeichnet, dass** die Höhe (23) der Schallschutzfläche (15) oberhalb der Oberkante (21) des Solarmoduls (10) mindestens so groß wie ein senkrechter Abstand zwischen einer Unterkante (17) des Solarmoduls (10) und der Oberkante (21) des Solarmoduls (10) ist.

4. Lärmschutzvorrichtung (2) gemäß Anspruch 3, **dadurch gekennzeichnet, dass** die Höhe (23) der Schallschutzfläche (15) oberhalb der Oberkante (21) des Solarmoduls (10) etwa doppelt so groß wie ein senkrechter Abstand zwischen einer Unterkante (17) des Solarmoduls (10) und der Oberkante (21) des Solarmoduls (10) ist.

5. Lärmschutzvorrichtung (2) gemäß einem der Ansprüche 1 bis 4, **dadurch gekennzeichnet, dass** der mindestens eine Ausleger (7) mit einer Haupterstreckungsebene des mindestens einen Wandelements (4) einen Winkel von etwa 60° einschließt.

6. Lärmschutzvorrichtung (2) gemäß einem der Ansprüche 1 bis 5, **dadurch gekennzeichnet, dass** die Lärmschutzvorrichtung (33) mindestens zwei vom Wandelement (4) ausgehende Ausleger (6, 7) aufweist, wobei die Ausleger (6, 7) das Wandelement (4) beidseitig abstützen.

7. Lärmschutzvorrichtung (2) gemäß Anspruch 6, **dadurch gekennzeichnet, dass** die Ausleger (6, 7) auf beiden Seiten des Wandelements (4) Solarmodule (10) tragen.

8. Lärmschutzvorrichtung (2) gemäß einem der Ansprüche 1 bis 7, **dadurch gekennzeichnet, dass** mindestens einer der Ausleger (6, 7) eine Abstrebung (24) zu einem Fuß (25) des Wandelements (4) aufweist.

9. Lärmschutzvorrichtung (2) gemäß Anspruch 8, **dadurch gekennzeichnet, dass** die Abstrebung (24) von einer Mitte des Auslegers (6, 7) ausgeht.

10. Lärmschutzvorrichtung (33) gemäß einem der Ansprüche 1 bis 9, **dadurch gekennzeichnet, dass** das Wandelement (119) im Bereich der Schallschutzfläche (15) mindestens ein zusätzliches Solarmodul (103) trägt.

11. Lärmschutzvorrichtung (33) gemäß Anspruch 10, **dadurch gekennzeichnet, dass** das Wandelement (119) im Bereich der Schallschutzfläche (15) ein Profilelement (122) aufweist, wobei das Profilelement (122) einen Körper (102) aufweist und mindestens eine Außenseite (104) hat, wobei der Körper (102) zu der mindestens einen Außenseite (104) hin ein Auflager (107) aufweist, wobei das mindestens eine zusätzliche Solarmodul (103) auf dem Auflager (107) angeordnet und mit dem Körper (102) verbunden ist, wobei das zusätzliche Solarmodul (103) in Bezug auf eine Vertikale (108) in Richtung einer Oberseite (109) des Profilelements (122) geneigt ist, wobei der Körper (102) auf der mindestens einen Außenseite (104) mindestens eine für ankommenden Schall direkt erreichbare Schallabsorptionsoberfläche (110) aufweist, wobei die Schallabsorptionsoberfläche (110) zumindest abschnittsweise in Bezug auf die Vertikale (108) und/oder in Bezug auf eine Längsrichtung des Profilelements (122) geneigt ist, wobei der Flächeninhalt der Schallabsorptionsoberfläche (110) mindestens gleich groß wie der Flächeninhalt einer Ansichtsfläche des Profilelements (122) ist.

12. Lärmschutzvorrichtung (33) nach einem der Ansprüche 1 bis 11, **dadurch gekennzeichnet, dass** ein Körper des Wandelements im Bereich der Schallschutzfläche (15) im Wesentlichen aus einem schallabsorbierenden Material besteht.

13. Lärmschutzvorrichtung (33) nach einem der Ansprüche 1 bis 12, **dadurch gekennzeichnet, dass** ein Körper des Wandelements im Bereich der Schallschutzfläche (15) im Wesentlichen aus Holzbeton besteht.

14. Lärmschutzsystem (1), aufweisend:
eine Lärmschutzvorrichtung (2; 33) nach einem der Ansprüche 1 bis 13 und
ein weiteres Wandelement (12) mit einer weiteren Schallschutzfläche (13) und einem weiteren Solarmodul,
wobei die Schallschutzfläche (15) der Lärmschutzvorrichtung (2; 33) und die weitere Schallschutzfläche (13) im Wesentlichen senkrecht angeordnet sind,
wobei das weitere Wandelement (12) in einem Abstand von der Lärmschutzvorrichtung (2; 33) angeordnet ist,
wobei ein Höhenunterschied zwischen einer Unterkante (17) des Solarmoduls (10) der Lärmschutzvorrichtung (2; 33) und einer Oberkante (18) des weiteren Wandelements (12) kleiner als das 0,6-fache oder gleich dem 0,6-fachen der Horizontalstrecke zwischen denselben Kanten (17, 18) ist und/oder ein Höhenunterschied zwischen einer Unterkante (19) des weiteren Solarmoduls und einer Oberkante (20) der Lärmschutzvorrichtung (2; 33) kleiner als das 0,6-fache oder gleich dem 0,6-fachen der Horizontalstrecke zwischen denselben Kanten (19, 20) ist.

15. Lärmschutzsystem (1) nach Anspruch 14, **dadurch gekennzeichnet, dass** der größere der beiden Höhenunterschiede etwa dem 0,6-fachen der zugeordneten Horizontalstrecke entspricht.

## Claims

1. Noise protection device (2) comprising a substantially vertical wall element (4), at least one arm (7) which extends from the wall element (4) and at least one solar module (10) which is held by the arm (7), **characterized in that** the arm (7) laterally supports the wall element (4), and **in that** the wall element (4) forms a sound protection surface (15) above an upper edge (21) of the solar module (10), the sound protection surface (15) being designed as a sound absorption surface.

2. Noise protection device (2) according to claim 1, **characterized in that** the sound protection surface (15) extends substantially vertically upward from the upper edge (21) of the solar module (10).

3. Noise protection device (2) according to claim 2, **characterized in that** the height (23) of the sound protection surface (15) above the upper edge (21) of the solar module (10) is at least as great as a vertical distance between a lower edge (17) of the solar module (10) and the upper edge (21) of the solar module (10).

4. Noise protection device (2) according to claim 3, **characterized in that** the height (23) of the sound protection surface (15) above the upper edge (21) of the solar module (10) is approximately twice as great as a vertical distance between a lower edge (17) of the solar module (10) and the upper edge (21) of the solar module (10).

5. Noise protection device (2) according to any of claims 1 to 4, **characterized in that** the at least one arm (7) encloses an angle of approximately 60° with a main extension plane of the at least one wall element (4).

6. Noise protection device (2) according to any of claims 1 to 5, **characterized in that** the noise protection device (33) has at least two arms (6, 7) which extend from the wall element (4), the arms (6, 7) supporting the wall element (4) on both sides.

7. Noise protection device (2) according to claim 6, **characterized in that** the arms (6, 7) hold solar modules (10) on both sides of the wall element (4).

8. Noise protection device (2) according to any of claims 1 to 7, **characterized in that** at least one of the arms (6, 7) has a bracing (24) with respect to a foot (25) of the wall element (4).

9. Noise protection device (2) according to claim 8, **characterized in that** the bracing (24) extends from a center of the arm (6, 7).

10. Noise protection device (33) according to any of claims 1 to 9, **characterized in that** the wall element (119) holds at least one additional solar module (103) in the region of the sound protection surface (15).

11. Noise protection device (33) according to claim 10, **characterized in that** the wall element (119) has a profile element (122) in the region of the sound protection surface (15), the profile element (122) having a body (102) and at least one outer face (104), the body (102) having a support (107) toward the at least one outer face (104), the at least one additional solar module (103) being arranged on the support (107) and being connected to the body (102), the additional solar module (103) being inclined with respect to a vertical (108) in the direction of an upper face (109) of the profile element (122), the body (102) having, on the at least one outer face (104), at least one sound absorption surface which is directly accessible for incoming sound (110), the sound absorption surface (110) being inclined at least in portions with respect to the vertical (108) and/or with respect to a longitudinal direction of the profile element (122), the surface area of the sound absorption surface (110) being at least the same size as the surface area of a viewing surface of the profile element (122).

12. Noise protection device (33) according to any of claims 1 to 11, **characterized in that** a body of the wall element in the region of the sound protection surface (15) substantially consists of a sound-absorbing material.

13. Noise protection device (33) according to any of claims 1 to 12, **characterized in that** a body of the wall element in the region of the sound protection surface (15) consists substantially of wood concrete.

14. Noise protection system (1) comprising:
a noise protection device (2; 33) according to any of claims 1 to 13 and
a further wall element (12) having a further sound protection surface (13) and a further solar module,
wherein the sound protection surface (15) of the noise protection device (2; 33) and the further sound protection surface (13) are arranged substantially vertically,
wherein the further wall element (12) is arranged at a distance from the noise protection device (2; 33),
wherein a height difference between a lower edge (17) of the solar module (10) of the noise protection device (2; 33) and an upper edge (18) of the further wall element (12) is smaller than 0.6-times or equal to 0.6-times the horizontal path between the same edges (17, 18) and/or a
height difference between a lower edge (19) of the further solar module and an upper edge (20) of the noise protection device (2; 33) is smaller than 0.6-times or equal to 0.6-times the horizontal path between the same edges (19, 20).

15. Noise protection system (1) according to claim 14, **characterized in that** the greater of the two height differences is approximately 0.6-times the associated horizontal path.

## Revendications

1. Dispositif antibruit (2) avec un élément de paroi (4) sensiblement vertical, au moins un bras (7) partant de l'élément de paroi (4) et au moins un module solaire (10) porté par le bras (7), **caractérisé en ce que** le bras (7) protège latéralement l'élément de paroi (4), et que l'élément de paroi (4) forme au-dessus d'un bord supérieur (21) du module solaire (10) une surface d'isolation acoustique (15), dans lequel la surface d'isolation acoustique (15) est réalisée sous la forme d'une surface à absorption acoustique.

2. Dispositif antibruit (2) selon la revendication 1, **caractérisé en ce que** la surface d'isolation acoustique (15) s'étend à partir du bord supérieur (21) du module solaire (10) sensiblement verticalement vers le haut.

3. Dispositif antibruit (2) selon la revendication 2, **caractérisé en ce que** la hauteur (23) de la surface d'isolation acoustique (15) au-dessus du bord supérieur (21) du module solaire (10) est au moins aussi grande qu'une distance verticale entre un bord inférieur (17) du module solaire (10) et le bord supérieur (21) du module solaire (10).

4. Dispositif antibruit (2) selon la revendication 3, **caractérisé en ce que** la hauteur (23) de la surface d'isolation acoustique (15) au-dessus du bord supérieur (21) du module solaire (10) est deux fois plus grande qu'une distance verticale entre un bord inférieur (17) du module solaire (10) et le bord supérieur (21) du module solaire (10).

5. Dispositif antibruit (2) selon l'une quelconque des revendications 1 à 4, **caractérisé en ce que** le au moins un bras (7) forme avec un plan d'étendue principale du au moins un élément de paroi (4) un angle d'environ 60°.

6. Dispositif antibruit (2) selon l'une quelconque des revendications 1 à 5, **caractérisé en ce que** le dispositif antibruit (33) présente au moins deux bras (6, 7) partant de l'élément de paroi (4), dans lequel les bras (6, 7) soutiennent l'élément de paroi (4) des deux côtés.

7. Dispositif antibruit (2) selon la revendication 6, **caractérisé en ce que** les bras (6, 7) portent des modules solaires (10) sur les deux côtés de l'élément de paroi (4).

8. Dispositif antibruit (2) selon l'une quelconque des revendications 1 à 7, **caractérisé en ce qu'**au moins un des bras (6, 7) présente un entretoisement (24) vers un pied (25) de l'élément de paroi (4).

9. Dispositif antibruit (2) selon la revendication 8, **caractérisé en ce que** l'entretoisement (24) part d'un centre du bras (6, 7).

10. Dispositif antibruit (33) selon l'une quelconque des revendications 1 à 9, **caractérisé en ce que** l'élément de paroi (119) porte dans la zone de la surface d'isolation acoustique (15) au moins un module solaire (103) supplémentaire.

11. Dispositif antibruit (33) selon la revendication 10, **caractérisé en ce que** l'élément de paroi (119) présente dans la zone de la surface d'isolation acoustique (15) un élément profilé (122), dans lequel l'élément profilé (122) présente un corps (102) et possède au moins une face extérieure (104), dans lequel le corps (102) présente en direction de la au moins une face extérieure (104) un support (107), dans lequel le au moins un module solaire (103) supplémentaire est disposé sur le support (107) et relié au corps (102), dans lequel le module solaire (103) supplémentaire est incliné par rapport à une verticale (108) en direction d'une face supérieure (109) de l'élément profilé (122), dans lequel le corps (102) présente sur la au moins une face extérieure (104) au moins une surface à absorption acoustique (110) pouvant être atteinte directement pour un bruit arrivant, dans lequel la surface à absorption acoustique (110) est inclinée au moins en partie par rapport à la verticale (108) et/ou par rapport à une direction longitudinale de l'élément profilé (122), dans lequel la superficie de la surface à absorption acoustique (110) est au moins aussi grande que la superficie d'une face visible de l'élément profilé (122).

12. Dispositif antibruit (33) selon l'une quelconque des revendications 1 à 11, **caractérisé en ce qu'**un corps de l'élément de paroi dans la zone de la surface d'isolation acoustique (15) est constitué sensiblement d'un matériau absorbant les bruits.

13. Dispositif antibruit (33) selon l'une quelconque des revendications 1 à 12, **caractérisé en ce qu'**un corps de l'élément de paroi dans la zone de la surface d'isolation acoustique (15) est constitué sensiblement de béton de bois.

14. Système antibruit (1), présentant :
un dispositif antibruit (2 ; 33) selon l'une quelconque des revendications 1 à 13 et
un autre élément de paroi (12) avec une autre surface d'isolation acoustique (13) et un autre module solaire,
dans lequel la surface d'isolation acoustique (15) du dispositif antibruit (2 ; 33) et l'autre surface d'isolation acoustique (13) sont disposées sensiblement verticalement,
dans lequel l'autre élément de paroi (12) est disposé à distance du dispositif antibruit (2 ; 33),
dans lequel une différence de hauteur entre un bord inférieur (17) du module solaire (10) du dispositif antibruit (2 ; 33) et un bord supérieur (18) de l'autre élément de paroi (12) est inférieure à 0,6 fois ou égale à 0,6 fois le trajet horizontal entre les mêmes bords (17, 18) et/ou une différence de hauteur entre un bord inférieur (19) de l'autre module solaire et un bord supérieur (20) du dispositif antibruit (2 ; 33) est inférieure à 0,6 fois ou égale à 0,6 fois le trajet horizontal entre les mêmes bords (19, 20).

15. Système antibruit (1) selon la revendication 14, **caractérisé en ce que** la plus grande des deux différences de hauteur correspond sensiblement à 0,6 fois le trajet horizontal associé.
